**Europäisches Patentamt**

**European Patent Office**

**Office européen des brevets**

(19)

(11) Publication number : **0 262 233 B1**

# EUROPEAN PATENT SPECIFICATION

(12)

(45) Date of publication of patent specification :
22.07.92 Bulletin 92/30

(51) Int. Cl.⁵ : **C08L 51/06, C08L 77/00**

(21) Application number : **87902725.8**

(22) Date of filing : **14.04.87**

(86) International application number :
**PCT/JP87/00234**

(87) International publication number :
**WO 87/06249 22.10.87 Gazette 87/23**

(54) **THERMOPLASTIC RESIN COMPOSITION.**

(30) Priority : **14.04.86 JP 84265/86**

(43) Date of publication of application :
**06.04.88 Bulletin 88/14**

(45) Publication of the grant of the patent :
**22.07.92 Bulletin 92/30**

(84) Designated Contracting States :
**AT BE CH DE FR GB IT LI NL SE**

(56) References cited :
JP-A- 559 661
JP-A- 5 245 653
JP-A- 5 674 145
JP-A- 6 058 458

(73) Proprietor : **Tonen Chemical Corporation**
**1-1, Tsukiji 4-Chome**
**Chuo-Ku Tokyo (JP)**

(72) Inventor : **KITANO, Kissho**
**4-2-225, Nishitsurugaoka 1-chome, Ooi-machi**
**Iruma-gun, Saitama 354 (JP)**
Inventor : **FUJITA, Yuji**
**4-3-321, Nishitsurugaoka 1-chome, Ooi-machi**
**Iruma-gun, Saitama 354 (JP)**
Inventor : **SAKAIZAWA, Masao**
**4-6, Nishitsurugaoka 1-chome, Ooi-machi**
**Iruma-gun, Saitama 354 (JP)**
Inventor : **SAKUMA, Masato**
**17-12, Harigaya 2-chome, Urawa-shi**
**Saitama 338 (JP)**
Inventor : **YAGI, Yukihiko**
**4-6, Nishitsurugaoka 1-chome, Ooi-machi**
**Iruma-gun, Saitama 354 (JP)**
Inventor : **YAMAMOTO, Noboru**
**52-13-101, Hayamiya 1-chome, Nerima-ku**
**Tokyo 176 (JP)**

(74) Representative : **Matthews, Derek Peter et al**
**Frank B. Dehn & Co. Imperial House 15-19**
**Kingsway**
**London WC2B 6UZ (GB)**

EP 0 262 233 B1

## Description

Technical Field

This invention relates to a thermoplastic resin composition, used for manufacturing products, with excellent mechanical properties such as tensile strength.

Prior Art

It is known that a composition having properties of both a crystalline polyolefin and a polyamide can be obtained by blending them. Attempts have been made to obtain a blended resin composition having the characteristic properties of both polypropylene and polyamide to improve the mechanical properties and heat resistance of polypropylene, especially crystalline polyolefins, and to reduce the water absorption of polyamide, and thereby avoiding the deterioration of physical properties of polyamide caused by water absorption. This object is not achieved by the mere bending of polypropylene and polyamide by melt-mixing. Mere blending provides a mixture which is subject to phase separation and is poor in surface gloss and mechanical strength, because polypropylene and polyamide mix poorly. Several compositions with improved compatibility have been proposed. For example, there is disclosed a composition produced from a crystalline or low-crystalline polyolefin, partly or entirely modified with an acid anhydride or derivative thereof (Japanese Patent Laid-open Nos. 123158/1979, 232135/1984, 118735/1985, 110740/1985); a composition produced from a modified polyolefin to which metal atoms are bonded (Japanese Patent Laid-open Nos. 167740/1981 and 74143/1984); and a composition produced from a silane-modified polypropylene (Japanese Patent Laid-open No. 45653/1977).

Conventional compositions are improved in compatibility by use of modified polyolefins; but are not sufficiently improved in mechanical strength.

Disclosure of the Invention

It is an object of the present invention to provide a composition free of the problems of conventional compositions. The composition of the invention has improved compatibility between the polyolefin and polyamide, and also has improved mechanical properties, especially tensile strength and stiffness.

Accordingly, the invention resides in a thermoplastic resin composition which comprises 5 to 95 parts by weight of a modified polyolefin (A) or said modified polyolefin diluted with a further polyolefin, said modified polyolefin and further polyolefin being selected from crystalline polypropylene, crystalline propylene-based polymers and mixtures thereof, and 5 to 95 parts by weight of polyamide (B), said modified polyolefin being grafted with from 0.001 to 10 wt % of an unsaturated dicarboxylic acid or a derivative thereof and 0.01 to 20 times the molar quantity of said dicarboxylic acid of a silane compound of formula $R(CH_2)_{x-1}Si(OR')_3$, where R is a functional group which has an affinity for an unsaturated carboxylic acid or derivative thereof, R' is an alkyl or aryl group which may have a substituent group, and x has a value of 1 to 5.

The polyolefin in this invention comprises crystalline polypropylene or a crystalline propylene-based polymer (such as propylene-$\alpha$-olefin random or block copolymer). In addition, the polyolefin may contain a small amount of olefin-based copolymer rubber such as ethylene-propylene rubber, ethylene-butene rubber, propylene-butene rubber, and ethylene-propylene-diene terpolymer rubber.

The modified polyolefin (A) in the present invention is one which is formed by grafting the above-mentioned polyolefin with an unsaturated dicarboxylic (hereinafter simply "unsaturated carboxylic acid") or a derivative thereof, and a silane compound. The amount of the unsaturated carboxylic acid or derivative thereof is 0.001 to 10 wt%, preferably 0.05 to 5 wt%. The amount of the silane compound is 0.01 to 20 times, preferably 0.1 to 10 times, the molar quantity of the unsaturated carboxylic acid, or derivative thereof. If the amount of the unsaturated carboxylic acid and silane compound grafted is less than the above-specified range, the resulting composition is not improved in miscibility or physical properties.

Examples of the unsaturated carboxylic acid and derivative thereof include maleic acid, fumaric acid, tetrahydrophthalic acid, itaconic acid, citraconic acid, endo-bicyclo[2.2.1]-5-heptene-2,3-dicarboxylic acid, acid anhydrides thereof, esters thereof, and metal salts thereof.

The silane compound is an organosilane compound represented by the formula $R(CH_2)_{x-1}Si(OR')_3$, where R is a functional group which has an affinity for an unsaturated carboxylic acid or derivative thereof, R' is an alkyl or aryl group which may have a substituent group, and x has a value of 1 to 5. Examples of the functional group represented by R include the amino group, epoxy group, mercapto group, ureido group, glycidoxy group, and anilino group. Examples of R' include methyl, ethyl propyl, butyl, and β-methoxyethyl groups.

Examples of the organosilane compound include γ-aminopropyltriethoxysilane, γ-glycidoxypropyltrimethoxysilane, γ -mercaptopropyltrimethoxysilane, β -(3,4-epoxycyclohexyl) ethyltrinethoxysilane; N- β -- (aminoethyl)- γ -aminopropyltrimethoxysilane, γ -aminopropyltriethoxysilane, γ -ureid propyltriethoxyvsilane, and γ -anilinopropyltriethoxysilane.

The modified polyolefin (A) in the present invention can be produced by any known process. According to one method, the above-mentioned polyolefin is incorporated by dry-blending it with an unsaturated carboxylic acid, or a derivative thereof, and an organic peroxide (such as di-t-butyl peroxide and 2,5-dimethyl-2,5-di-(t-butylperoxy)-hexyne-3) as a reaction initiator, and the resulting dry blend is melt-mixed. According to another method, a polyolefin is dissolved in a solvent and an unsaturated carboxylic acid, or a derivative thereof, and a reaction initiator, are added to the solution for reaction, whereby the unsaturated carboxylic arid, or derivative thereof, is grafted to give a modified polyolefin. To the modified polyolefin is then added the above-mentioned organosilane compound, by dry-blending, followed by melt-mixing. The melt-mixing causes the organosilane compound to react with the unsaturated carboxylic acid, or derivative thereof, grafted to the polyolefin. Thus there is obtained the modified polyolefin (A) grafted with the two components. The modified polyolefin (A) can also be obtained by dry-blending a polyolefin, an unsaturated carboxylic acid, or derivative thereof, an organic peroxide, and an organosilane compound, together, followed by melt-mixing. The previously mentioned method is preferred.

The modified polyolefin (A) may be diluted with the above-mentioned polyolefin. The dilution ratio may be properly determined according to the amount of the unsaturated carboxylic acid and silane compound grafted to the modified polyolefin (A). After dilution, the diluted modified polyolefin (A) should contain the unsaturated carboxylic acid and silane compound in an amount specified above. Otherwise, the resulting composition is not improved in compatibility or physical properties.

The polyamide (C) in the present invention is a polymeric compound having the acide amide (-CONH-) as the repeating unit. It is classified, according to the type of polymerization, into (1) one which is formed by a ring-opening polymerisation of a lactam, (2) one which is formed by polycondensation of an aninocarboxylic acid, and (3) one which is formed by polycondensation of a diamine and a dibasic acid. These polyamides are called nylon by the generic name, and they include nylon-6, nylon-12, nylon-9, nylon-11, nylon-66, and nylon-610. Among them are preferably nylon-6 and nylon-66. The polyamide is not specifically limited in molecular weight; hut the preferred molecular weight is one which corresponds to a relative viscosity ($\eta_{rel}$) higher than 0.5, preferably higher than 2.0.

The composition of the present invention is composed of the following components:

(A) Modified polyolefin or dilued product thereof: 5 to 95 wt%, preferably 20 to 90 wt%.

(B) Polyamide: 95 to 5 wt%, preferably 80 to 10 wt%.

If the amount of the modified polyolefin (A) or diluted product thereof is less than 5 wt%, the resulting composition is not improved in moisture resistance, chemical resistance, or compatibility. If the amount of the polyamide (B) is less than 5 wt%, the resulting composition is not improved in mechanical properties, heat resistance, or barrier properties, by polyamide.

The composition of the invention may be prepared by mixing the above-mentioned modified polyolefin (A) and polyamide (B) in the specified mixing ratio. For example, the above-mentioned components are previously dry-blended by using a Henschel mixer, V-blender, ribbon blender or tumbler and then the resulting mixture is mixed in a single- or twin-screw extruder, Banbury mixer or roll mill at a temperature at which the resins melt. After melt-mixing the composition is pelletized or crushed.

The composition of the invention may be incorporated with a heat stabilizer, UV light absorber, nucleating agent, antistatic agent, slip agent, flame retardant, coloring agent, glass fiber, inorganic or organic filler in amounts not harmful to the object of the invention.

During melt-mixing, reactions take place between the unsaturated carboxylic acid grafted to a polyolefin, or derivative thereof, and the organosilane compound having functional groups. The reactions induce a partial grafting reaction between the modified polyolefin (A) having the alkoxysilyl group on the side chain and the polyamide (B), to impart good compatibility to the composition. When the composition is treated with water or steam. intermolecular crosslinking takes place in the composition, which improves the bonding of resin phases and increases the mechanical strenpth to a great extent.

## Best Modes for Carrying out the Invention

## Examples

The invention rill nor be described in more detail by reference to the following examples, in which parts and percent are based on weight. The test methods used in the examples are as follows:

(1) MFR: JIS K7210 (load 2.16 kg, 230°C)

(2) Tensile strength and tensile elongation at break: ASTM D638
(3) Flexural modulus: ASTM D790

## Example 1

### Preparation of modified polypropylene

100 parts by weight of homopolypropylene (MFR = 2.0 g/10 min, referred to as PP-1 hereinafter), 1 part of endo-bicyclo[2.2.1]-5-heptene-2,3-dicarboxylic anhydride, and 0.2 parts of organic peroxide [Perhexyne 25B, a product of Nippon Oils & Fats Co., Ltd.] were mixed at room temperature. The mixture ras pelletized at 200°C by using a mixing extruder. The resulting acid-modified homopolypropylene (referred to as CMPP-1 hereinafter) has an MFR of 50 g/10 min and contains 0.3 % of acid anhydride grafted.

Subsequently, 20 parts of CMPP-1, 80 parts of homopolypropylene (MFR = 3.5 g/10 min, referred to as PP-2 hereinafter), and an equimolar amount (for the acid anhydride in CMPP-1) of γ -aminopropyltriethoxysilane [A-1100, a product of Nippon Unicar Co., Ltd., referred to as SIL-1 hereinafter] were dry-blended, and the mixture was melt-mixed using a twin-screw extruder at 200°C, to give pellets of acid- and silane-modified PP.

### Preparation of compositions

70 parts of the acid- and silane-modified PP, obtained as mentioned above, and 30 parts of nylon-6 [relative viscosity =2.6, A1030BRL, a product of Unitica Ltd., referred to as NY-6 hereinafter], were preliminarily mixed at room temperature. The mixture was melt-mixed at 250°C using a twin-screw extruder. The thus obtained composition was made into test pieces for measurement of physical properties. The results are shown in Table 1.

### Treatment of composition with water

To 100 parts of the above-mentioned composition was added 0.1 parts of dibutyltin dilaurate by melt-mixing. The resulting composition was made into test pieces for measurement of physical properties. The test pieces were examined for physical properties after immersion in water at 50°C for 24 hours. The results are shown in Table 1.

### Examples 2 to 6

Compositions were prepared in the same manner as in Example 1 except that the amounts ot CMPP-1, CMPP-2, acid- and silane-modified PP, and NY-6 were changed as shown in Table 1. The physical properties of the compositions are shown in Table 1.

### Examples 7 and 8

Compositions were prepared in the same manner as in Example 1 except that SIL-1 was replaced by N-β-(aminoethyl)-γ-aminopropyltrimethoxysilane [A-1120, a product of Nippon Unicar Co., Ltd., referred to as SIL-2 hereinafter] or γ -glycidoxypropyltrimethosysilane [A-187, a product of Nippon Unicar Co., Ltd., referred to as SIL-3 hereinafter]. The physical properties of the compositions are shown in Table 1.

### Examples 9 and 10

Conpositions were prepared in the same manner as in Example 1 except that unmodified PP-2 was replaced by propylene-ethylene block copolymer (ethylene content = 7 %, MFR = 3.0 g/10 min, referred to as PP-3 hereinafter) or propylene-ethylene random copolyner (ethylene content = 3.2 %, MFR = 9 g/10 min, referred to as PP-4 hereinafter]. The physical properties of the compositions are shown in Table 1.

### Example 11

A composition was prepared in the same manner as in Example 1 except that NY-6 was replaced by nylon-66 [Malanyl A-125, a product of Unitica Ltd., referred to as NY-66 hereinafter]. The physical properties of the composition are shown in Table 1.

4

Example 12

A composition was prepared in the same manner as in Example 1 except that SIL-1 was used in an amount of 10 times the molar quantity of the acid grafted. The physical properties of the composition are shown in Table 1.

Example 13

A composition was prepared in the same manner as in Example 1 except that CMPP-1, PP-2, NY-6, and SIL-1 were melt-mixed simultaneously. The physical properties of the composition are shown in Table 1.

Examples 14 and 15

Compositions were prepared in the same manner as in Example 1 except that 30 parts of talc (average diameter of 5 μm) or glass fiber (13 μm in diameter, 3 mm long, chopped strand, referred to as GF hereinafter) were added for 100 parts of the resin. The physical properties of the compositions are shown in Table 1.

Example 16

A composition was prepared in the same manner as in Example 1 except that the acid modified propylene-ethylene block copolymer (amount of acid grafted = 0.3 %, referred to as CMPP-2 hereinafter) was prepared from PP-3 instead of PP-1. The physical properties of the compositions are shown in Table 1.

Example 17

A composition was prepared in the same manner as in Example 1 except that the acid- and silane-modified PP was prepared without incorporating CMPP-1 with PP-2. The physical properties of the composition are shown in Table 1.

Example 18

Acid-modified PP (amount of acid grafted = 0.08 g, MFR = 20 g/10 min, referred to as CMPP-3 hereinafter) was prepared in the same manner as in Example 1 except that 100 parts of PP-1, 0.3 parts of acid anhydride, and 0.1 parts of organic peroxide were used.

Subsequently, CMPP-3 was modified with SIL-1 in an equimolar amount of the acid anhydride. A composition was prepared in the same manner as in Example 1 except that the acid- and silane-modified PP was used. The physical properties of the composition are shown in Table 1.

Comparative Examples 1 to 4

Compositions were prepared in the same nanner as in Examples 1 to 4 except that the organosilane compound was not used. The physical properties of the compositions are shown in Table 1.

Comparative Example 5

A composition was prepared in the same manner as in Example 1 except that CMPP-1 was not used. The physical properties of the composition are shown in Table 1.

Comparative Example 6

A composition was prepared in the same manner as in Example 1 except that SIL-1 was prepared by amyltriethoxysilane having no functions groups (referred to as SIL-4 hereinafter). The physical properties of the composition are shown in Table 1.

Table 1

| Example No. | 1 | 2 | 3 | 4 | 5 | 6 | 7 | 8 |
|---|---|---|---|---|---|---|---|---|
| **Acid- and silane-modified PP** | | | | | | | | |
| Acid-modified PP (parts) | CMPP-1 14 | CMPP-1 14 | CMPP-1 14 | CMPP-1 14 | CMPP-1 7 | CMPP-1 28 | CMPP-1 14 | CMPP-1 14 |
| PP (parts) | PP-2 56 | PP-2 36 | PP-2 76 | PP-2 16 | PP-2 63 | PP-2 42 | PP-2 56 | PP-2 56 |
| Silane compound (mol for acid) | SIL-1 equi | SIL-1 equi | SIL-1 equi | SIL-1 equi | SIL-1 equi | SIL-1 equi | SIL-2 equi | SIL-3 equi |
| % of acid- & silane-modified PP | 70 | 50 | 90 | 30 | 70 | 70 | 70 | 70 |
| Polyamide (%) | NY-6 30 | NY-6 50 | NY-6 10 | NY-6 70 | NY-6 30 | NY-6 30 | NY-6 30 | NY-6 30 |
| **Dry state** | | | | | | | | |
| Tensile strength (kg/cm$^2$) | 495 | 820 | 420 | 930 | 520 | 400 | 495 | 470 |
| Elongation at break (%) | 22 | 20 | 35 | 11 | 17 | 11 | 26 | 28 |
| Flexural modulus (kg/cm$^2$) | 19400 | 21500 | 16200 | 23200 | 20300 | 16500 | 19000 | 18800 |
| **After water treatment** | | | | | | | | |
| Tensile strength (kg/cm$^2$) | 665 | 850 | 490 | 920 | 610 | 560 | 630 | 540 |
| Elongation at break (%) | 20 | 21 | 31 | 13 | 25 | 9 | 23 | 30 |
| Flexural modulus (kg/cm$^2$) | 20300 | 21000 | 17500 | 21500 | 20500 | 16600 | 20100 | 18000 |

EP 0 262 233 B1

Table 1 (continued)

| Example No. | 9 | 10 | 11 | 12 | 13 | 14 | 15 | 16 |
|---|---|---|---|---|---|---|---|---|
| **Acid- and silane-modified PP** | | | | | | | | |
| Acid-modified PP (parts) | CMPP-1 14 | CMPP-1 14 | CMPP-1 14 | CMPP-1 14 | CMPP-1 14 | CMPP-1 14 | CMPP-1 14 | CMPP-2 14 |
| PP (parts) | PP-3 56 | PP-4 56 | PP-2 56 | PP-2 56 | PP-2 56 | PP-2 56 | PP-2 56 | PP-2 56 |
| Silane compound (mol for acid) | SIL-1 equi | SIL-1 equi | SIL-1 equi | SIL-1 10 | SIL-1 equi | SIL-1 equi | SIL-1 equi | SIL-1 equi |
| % of acid- & silane-modified PP | 70 | 70 | 70 | 70 | 70 | 70 | 70 | 70 |
| Polyamide (%) | NY-6 30 | NY-6 30 | NY-66 30 | NY-6 30 | NY-6 30 | NY-6 30 talc (30) (parts) | NY-6 30 GF (30) (parts) | NY-6 30 |
| **Dry state** | | | | | | | | |
| Tensile strength (kg/cm$^2$) | 400 | 330 | 540 | 490 | 465 | 520 | 1380 | 490 |
| Elongation at break (%) | 23 | 30 | 12 | 21 | 21 | 6 | 4 | 25 |
| Flexural modulus (kg/cm$^2$) | 16100 | 13300 | 23500 | 19600 | 19300 | 40800 | 58600 | 19000 |
| **After water treatment** | | | | | | | | |
| Tensile strength (kg/cm$^2$) | 560 | 510 | 705 | 575 | 605 | 635 | 1210 | 660 |
| Elongation at break (%) | 21 | 19 | 10 | 18 | 23 | 6 | 5 | 25 |
| Flexural modulus (kg/cm$^2$) | 17000 | 14100 | 25600 | 21100 | 19600 | 39300 | 56200 | 20100 |

EP 0 262 233 B1

Table 1 (continued)

| Example No. | 17 | 18 | 1 * | 2 * | 3 * | 4 * | 5 * | 6 * |
|---|---|---|---|---|---|---|---|---|
| **Acid- and silane-modified PP** | | | | | | | | |
| Acid-modified PP (parts) | CMPP-1 30 | CMPP-3 70 | CMPP-1 14 | CMPP-1 14 | CMPP-1 14 | CMPP-1 14 | – – | CMPP-1 14 |
| PP (parts) | – – | – – | PP-2 76 | PP-2 56 | PP-2 36 | PP-2 16 | PP-2 70 | PP-2 56 |
| Silane compound (mol for acid) | SIL-1 equi | SIL-1 equi | – – | – – | – – | – – | SIL-1 equi | SIL-4 equi |
| % of acid- & silane-modified PP | 30 | 70 | 90 | 70 | 50 | 30 | 70 | 70 |
| Polyamide (%) | NY-6 70 | NY-6 30 | NY-6 10 | NY-6 30 | NY-6 50 | NY-6 70 | NY-6 30 | NY-6 30 |
| **Dry state** | | | | | | | | |
| Tensile strength (kg/cm²) | 810 | 515 | 380 | 490 | 615 | 690 | 330 | 420 |
| Elongation at break (%) | 7 | 26 | 40 | 20 | 31 | 15 | 7 | 19 |
| Flexural modulus (kg/cm²) | 21300 | 19900 | 16000 | 19000 | 21000 | 22300 | 16000 | 18800 |
| **After water treatment** | | | | | | | | |
| Tensile strength (kg/cm²) | 860 | 695 | 370 | 415 | 450 | 500 | 320 | 417 |
| Elongation at break (%) | 9 | 23 | 43 | 39 | 41 | 45 | 8 | 37 |
| Flexural modulus (kg/cm²) | 20700 | 20500 | 15500 | 16000 | 15800 | 14200 | 15000 | 15900 |

* Comparative Examples

EP 0 262 233 B1

Industrial uses of the Invention

The composition of the invention is improved over conventional compositions in its compatibility of polyolefin and polyamide, and also in its mechanical properties, especially tensile strength and stiffness, by the intermolecular crosslinking. In addition, it is also improved in ability to be painted, adhesion, and compatibility with fillers, which improvement is due to the organosilane compound.

Because of the above-mentioned characteristic properties, the composition of the invention is suitable for industrial materials, especially for use in automobiles and in household electric appliances.

## Claims

### Claims for the following Contracting States: BE, CH, DE, FR, GB, IT, LI, NL, SE

1. A thermoplastic resin composition which comprises 5 to 95 parts by weight of a modified polyolefin (A) or said modified polyolefin diluted with a further polyolefin, said modified polyolefin and further polyolefin being selected from crystalline polypropylene, crystalline propylene-based polymers and mixtures thereof, and 5 to 95 parts by weight of polyamide (B), said modified polyolefin being grafted with from 0.001 to 10 wt % of an unsaturated dicarboxylic acid or a derivative thereof and 0.01 to 20 times the molar quantity of said dicarboxylic acid of a silane compound of formula $R(CH_2)_{x-1} Si(OR')_3$, where R is a functional group which has an affinity for an unsaturated carboxylic acid or derivative thereof, R' is an alkyl or aryl group which may have a substituent group, and x has a value of 1 to 5.

2. A thermoplastic resin composition as claimed in claim 1 comprising from 20 to 90 parts by weight of said modified polyolefin (A) or diluted product thereof and from 10 to 80 parts by weight of said polyamide (B).

3. A process for producing a thermoplastic resin composition which comprises melt-mixing components (A) and (B) as defined in claim 1 or claim 2.

### Claims for the following Contracting State: AT

1. A process for producing a thermoplastic resin composition which comprises melt-mixing 5 to 95 parts by weight of a modified polyolefin (A) or said modified polyolefin diluted with a further polyolefin, said modified polyolefin and further polyolefin being selected from crystalline polypropylene, crystalline propylene-based polymers and mixtures thereof, and 5 to 95 parts by weight of polyamide (B), said modified polyolefin being grafted with from 0.001 to 10 wt % of an unsaturated dicarboxylic acid or a derivative thereof and 0.01 to 20 times the molar quantity of said dicarboxylic acid of a silane compound of formula $R(CH_2)_{x-1} Si (OR')_3$, where R is a functional group which has an affinity for an unsaturated carboxylic acid or derivative thereof, R' is an alkyl or aryl group which may have a substituent group, and x has a value of 1 to 5.

2. A process as claimed in claim 1 comprising melt-mixing from 20 to 90 parts by weight of said modified polyolefin (A) or diluted product thereof and from 10 to 80 parts by weight of said polyamide (B).

## Patentansprüche

### Patentansprüche für folgende Vertragsstaaten: BE, CH, DE, FR, GB, IT, LI, NL, SE

1. Thermoplastische Harzzusammensetzung, die 5 bis 95 Gewichtsteile eines modifizierten Polyolefins (A) oder des modifizierten Polyolefins, welches mit einem weiteren Polyolefin verschnitten ist, wobei das modifizierte Polyolefin und das weitere Polyolefin ausgewählt werden aus kristallinem Polypropylen, kristallinen, auf Propylen basierenden Polymeren und Mischungen hiervon, und 5 bis 95 Gewichtsteile Polyamid (B) umfaßt, wobei das modifizierte Polyolefin mit 0,001 bis 10 Gew.% einer ungesättigten Dicarbonsäure oder einem Derivat derselben und der 0,01 bis 20 fachen molaren Menge der Dicarbonsäure einer Silanverbindung der Formel $R(CH_2)_{x-1} Si(OR')_3$ gepfropft wird, wobei R eine funktionelle Gruppe ist, die eine Affinität zu einer ungesättigten Carbonsäure oder deren Derivat hat, R' eine Alkyl- oder Arylgruppe ist, die eine substituierende Gruppe haben darf, und x einen Wert von 1 bis 5 hat.

2. Thermoplastische Harzzusammensetzung nach Anspruch 1, die zu 20 bis 90 Gewichtsteilen modifiziertes Polyolefin (A) oder dessen Verschnittprodukt und 10 bis 80 Gewichtsteile Polyamid (B) umfaßt.

3. Verfahren zur Herstellung einer thermoplastischen Harzzusammensetzung, das Schmelzmischen der Komponenten (A) und (B), wie in Anspruch 1 und Anspruch 2 definiert, umfaßt.

**Patentansprüche für folgenden Vertragsstaat: AT**

1. Verfahren zur Herstellung einer thermoplastischen Harzzusammensetzung, das Schmelzmischen von 5 bis 95 Gewichtsanteilen eines modifizierten Polyolefins (A) oder des modifizierten Polyolefins, welches mit einem weiteren Polyolefin verschnitten ist, wobei das modifizierte Polyolefin und das weitere Polyolefin ausgewählt werden aus kristallinem Polypropylen, kristallinen, auf Propylen basierenden Polymeren und Mischungen hiervon, und 5 bis 95 Gewichtsteilen Polyamid (B) umfaßt, wobei das modifizierte Polyolefin mit 0,001 bis 10 Gew.% einer ungesättigten Dicarbonsäure oder einem Derivat derselben und der 0,01 bis 20 fachen molaren Menge der Dicarbonsäure einer Silanverbindung der Formel $R(CH_2)_{x-1}Si(OR')_3$ gepfropft wird, wobei R eine funktionelle Gruppe ist, die eine Affinität zu einer ungesättigten Carbonsäure oder deren Derivat hat, R' eine Alkyl- oder Arylgruppe ist, die eine substituierende Gruppe haben darf, und x einen Wert von 1 bis 5 hat.

2. Verfahren nach Anspruch 1, das Schmelzmischen von 20 bis 90 Gewichtsteilen modifizierten Polyolefins (A) oder dessen Verschnittprodukt und 10 bis 80 Gewichtsteilen Polyamid (B) umfaßt.


**Revendications**

**Revendications pour les Etats contractants suivants: BE, CH, DE, FR, GB, IT, LI, NL, SE**

1. Composition de résine thermoplastique qui comprend 5 à 95 parties en poids d'une polyoléfine modifiée (A) ou bien de ladite polyoléfine modifiée diluée avec une polyoléfine supplémentaire, ladite polyoléfine modifiée et ladite polyoléfine supplémentaire étant choisies entre un polypropylène cristallin, des polymères cristallins à base de propylène et leurs mélanges, et 5 à 95 parties en poids d'un polyamide (B), ladite polyoléfine modifiée étant greffée avec 0,001 à 10 % en poids d'un acide dicarboxylique insaturé ou d'un de ses dérivés et avec une quantité de 0,01 à 20 fois la quantité molaire dudit acide carboxylique d'un silane de formule $R(CH_2)_{x-1}Si(OR')_3$, dans laquelle R représente un groupe fonctionnel qui possède une affinité pour un acide carboxylique insaturé ou un de ses dérivés, R' représente un groupe alkyle ou aryle qui peut porter un substituant et x a une valeur de 1 à 5.

2. Composition de résine thermoplastique suivant la revendication 1, comprenant 20 à 90 parties en poids de la polyoléfine modifiée (A) ou d'un produit formé par dilution de cette polyoléfine, et 10 à 80 parties en poids du polyamide (B).

3. Procédé de production d'une composition de résine thermoplastique, qui consiste à mélanger à l'état fondu les constituants (A) et (B) suivant la revendication 1 ou la revendication 2.

**Revendications pour l'Etat contractant suivant: AT**

1. Procédé de production d'une composition de résine thermoplastique, qui consiste à mélanger à l'état fondu 5 à 95 parties en poids d'une polyoléfine modifiée (A) ou de ladite polyoléfine modifiée diluée avec une polyoléfine supplémentaire, ladite polyoléfine modifiée et ladite polyoléfine supplémentaire étant choisies entre un polypropylène cristallin, des polymères cristallins à base de propylène et leurs mélanges, et 5 à 95 parties en poids d'un polyamide (B), ladite polyoléfine modifiée étant greffée avec 0,001 à 10 % en poids d'un acide dicarboxylique insaturé ou d'un de ses dérivés et avec une quantité de 0,01 à 20 fois la quantité molaire dudit acide dicarboxylique d'un silane de formule $R(CH_2)_{x-1}Si(OR')_3$, dans laquelle R représente un groupe fonctionnel qui possède une affinité pour un acide carboxylique insaturé ou un de ses dérivés, R' représente un groupe alkyle ou aryle qui peut porter un substituant et x a une valeur de 1 à 5.

2. Procédé suivant la revendication 1, consistant à mélanger à l'état fondu 20 à 90 parties en poids de la polyoléfine modifiée (A) ou d'un produit formé par dilution de cette polyoléfine, et 10 à 80 parties en poids du polyamide (B).